Europäisches Patentamt

European Patent Office

Office européen des brevets

(11) Publication number: **0 157 501**
A2

# EUROPEAN PATENT APPLICATION

(21) Application number: 85301441.3

(22) Date of filing: 01.03.85

(51) Int. Cl.⁴: **G 02 B 6/38**

(30) Priority: 05.03.84 FI 840873

(71) Applicant: SUOMEN KONELIIKE HELKAMA OY,
Vattuniemenkatu 27, SF-00210 Helsinki (FI)

(43) Date of publication of application: 09.10.85
Bulletin 85/41

(72) Inventor: Hakulinen, Mario, Vuorikatu 8 B 13,
SF-50100 Mikkeli (FI)

(84) Designated Contracting States: AT BE CH DE FR GB IT
LI NL SE

(74) Representative: Allen, Oliver John Richard et al, Lloyd
Wise, Tregear & Co. Norman House 105-109 Strand,
London, WC2R 0AE (GB)

(54) **Method of connecting an optical fiber.**

(57) This invention relates to a method for connecting an opti-
cal fiber using a connector formed by making three supporting
rods (1,2,3) into a bundle. According to the invention the said
rods (1,2,3) are bundled together by means of one or several
elastic sleeves (4), whereby when applying pressure to the
connector from the direction of one supporting rod, the central
opening (5) between the rods is made larger so as enable the
insertion of the fibers (6) to be joined, and whereby the connec-
tion is locked when releasing the pressure. In the same manner
it is also possible to undo the connection thus obtained, for
example for servicing purposes.

1'

This invention relates to a method of connecting optical fibers.

As the use of optical fibers has increased more attention is paid to the quality of the connections. To this end a variety of solutions have been developed using different kinds of connectors for connecting the fibers. Of these may be mentioned for example patent specifications SE 426,882, GB 2,115,176, GB 2,119,948, US 4,370,022, WO 83701123 and EP 56 196. A weakness in these connectors has been the complexity of their construction and the difficulty of making the connection.

The object of this invention is to provide a method of connecting optical fibers which is easy and rapid both to build and also to undo, for example for the purpose of servicing.

A connector in accordance with the invention is characterised by the use of three rods known per se for connecting the fibers, the rods being bundled together in an elastic manner allows the rods to move mutually when making the connection between the optical fibers rising three rods made up into a bundle. The ends of the optical fibers to be connected are inserted into the central opening formed between the rods, and joined together. Such a connection is reliable and stable without the use of rigid means.

This invention will now be further described by way of example with reference to the appended drawing, wherein:

Figure 1 is a perspective view of one embodiment of the invention,

Figure 2 is an end elevation,

Figure 3 is similar to Figure 2 but illustrates the joint during forming, and

Figures 4 and 5 illustrate embodiments according to the invention.

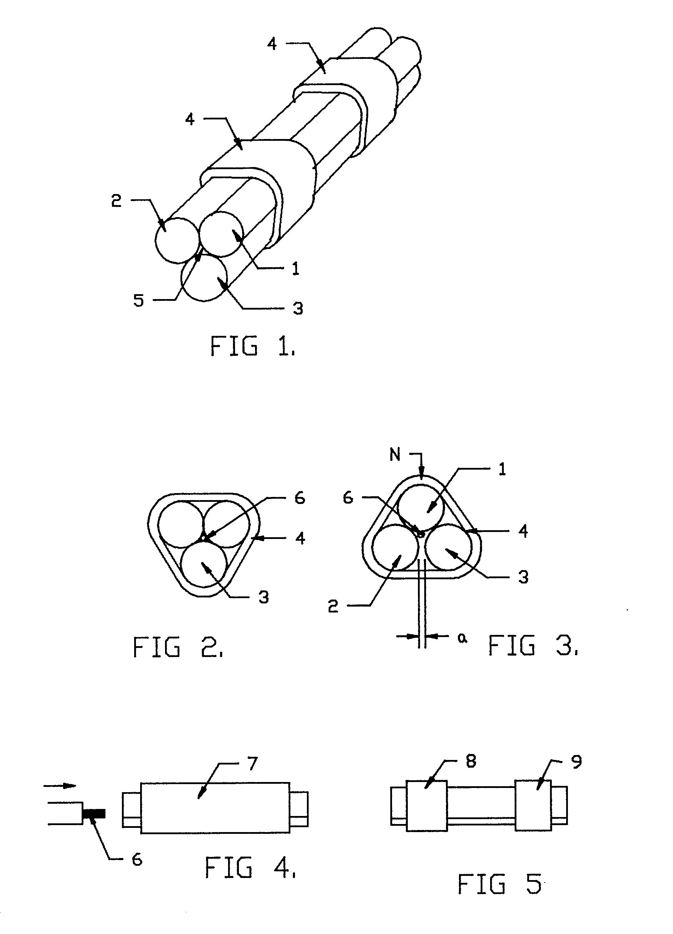

Referring to Figure 1 the connector for making the connection between the optical fibers according to the invention comprises three supporting rods 1, 2 and 3 of substantially circular cross-section, which rods are held in a bundle by means of two elastic sleeves 4. A central opening 5 is formed between these supporting rods, the size of which opening is defined by the diameter of the rods. These rods may also have mutually different diameters and have a cross-section which differs from a regular circle, but they should be chosen in such a manner as to, with regard to the diameter of the optical fiber to be connected, lock the fiber 6 within the central opening 5.

The connection according to Figure 2 obtained by means of the invention is formed according to Figure 3 by exerting pressure on the connector, for example, at the rod 1 in the direction of the arrow N, whereby the elastic sleeve 4 is deflected and a slit a is formed between the supporting rods 2 and 3, whereby the optical fiber 6 may be inserted into the enlarged opening 5, Figure 4. When the ends of the fibers 6 are in place in the connector, the pressure is released from the connector, whereby the elastic sleeve, (either alone or with others, 4, 7, 8, 9,) through compression forms a stable connection.

In case it is necessary to undo or open the connection made in the manner described above, pressure needs only to be exerted on the connector in the same

3'

manner as when making the connection, whereby the central opening 5 between the rods is again enlarged and the fiber is released.

Above the invention has been described with reference to an advantageous mode but it is evident that the invention may be carried out in many different ways. Thus the rods may be made of any known material suitable for the purpose, as also the elastic pressure sleeves. Also their length, diameter, cross section, end form etc may vary as required without departing from the scope of invention.

4'

CLAIMS:

1.      A method of connecting an optical fiber by means of a connector comprising three rods made up into a bundle, the ends of the optical fibers to be connected being inserted into the central opening formed between the rods, and so joined together, characterized in that the supporting rods (1,2,3) having a substantially circular cross-section are made up into a bundle by means of one or more elastic sleeves (4,7,8,9), whereby, exerting pressure on the connector in a transverse direction (N) between two supporting rods causes, due to the elasticity of the sleeve, a slit (a) enlarging the central opening (5), whereby the fibers (6) to be joined may be inserted into the enlarged central opening (5) and subsequently locked together on releasing the pressure from the connector.

2.      Method according to the Claim 1, characterized in that the diameters of the supporting rods (1,2,3) of the connector are chosen to be the same as or different from the diameter of the fiber (6) to be connected in order to achieve a sufficient degree of locking.

3.      Method according to the Claim 1 or 2, characterized in that the diameters of the supporting rods are mutually the same or different.

4.      Method according to anyone of the preceding Claim, characterized in that the supporting rods are mutually of the same or of different length.

5.      Method according to any of the preceding Claims, characterized in that the ends of the supporting rods are straight, rounded or of other shape.

5'

6.      Method according to any of the preceding Claims, characterized in that the connection obtained may be undone and the ends of the fibers released from the connection by exerting pressure in the same way as when making the connection.

1/1    0157501

FIG 1.

FIG 2.

FIG 3.

FIG 4.

FIG 5